(19) Europäisches Patentamt
European Patent Office
Office européen des brevets

(11) **EP 4 692 403 A1**

(12) **EUROPEAN PATENT APPLICATION**
published in accordance with Art. 153(4) EPC

(43) Date of publication:
**11.02.2026 Bulletin 2026/07**

(21) Application number: **24788401.8**

(22) Date of filing: **08.02.2024**

(51) International Patent Classification (IPC):
$C22C\ 38/00$ (2006.01)     $C21D\ 8/12$ (2026.01)
$C21D\ 9/46$ (2006.01)     $C22C\ 38/14$ (2006.01)
$C22C\ 38/60$ (2006.01)     $H01F\ 1/147$ (2006.01)
$H02K\ 1/02$ (2006.01)

(52) Cooperative Patent Classification (CPC):
C21D 8/12; C21D 9/46; C22C 38/00; C22C 38/14;
C22C 38/60; H01F 1/147; H02K 1/02

(86) International application number:
**PCT/JP2024/004252**

(87) International publication number:
**WO 2024/214371 (17.10.2024 Gazette 2024/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.04.2023 JP 2023065501**

(71) Applicant: JFE Steel Corporation
Tokyo, 100-0011 (JP)

(72) Inventors:
• **SUEHIRO Ryuichi**
  **Tokyo 100-0011 (JP)**
• **OKUBO Tomoyuki**
  **Tokyo 100-0011 (JP)**
• **ZAIZEN Yoshiaki**
  **Tokyo 100-0011 (JP)**
• **SAITO Hayato**
  **Tokyo 100-0011 (JP)**

(74) Representative: **Hoffmann Eitle**
**Patent- und Rechtsanwälte PartmbB**
**Arabellastraße 30**
**81925 München (DE)**

(54) **NON-ORIENTED ELECTROMAGNETIC STEEL SHEET**

(57)    A non-oriented electrical steel sheet that is effective in reducing the noise and vibration of electrical motors and that has a chemical composition containing, in mass%, C: 0.0050% or less, Si: 2.0 to 5.0%, Mn: 2.0% or less, P: 0.20% or less, S: 0.0050% or less, Al: 2.0% or less, N: 0.0050% or less, Ti: 0.0030% or less, Nb: 0.0010% or less, V: 0.0050% or less, and O: 0.0050% or less, wherein when an alternating-current magnetic field is applied so as to achieve a frequency of 50 Hz and a maximum magnetic flux density $B_m$ of 1.5 T in a rolling direction ($^{RD}$), a sheet width direction ($^{TD}$), and a direction ($^{DD}$) forming an angle of 45° with the rolling direction, in a rolling plane of the steel sheet , and zero-peak values of resulting magnetostrictions in directions perpendicular to the respective magnetic field directions and parallel to the rolling plane are represented as $\lambda_{\perp H}^{RD}$, $\lambda_{\perp H}^{TD}$, and $\lambda_{\perp H}^{DD}$, respectively, the absolute value of a magnetostriction in-plane average value $\lambda_{\perp H}^{ave}$ is $5\times10^{-6}$ or smaller.

[Fig. 3]

## Description

Technical Field

The present invention relates to a non-oriented electrical steel sheet, and relates particularly to a non-oriented electrical steel sheet that can reduce noise and vibration when used for iron cores of electrical motors (rotating machines) and the like.

Background Art

In recent years, as demand for reducing the energy consumed by electrical apparatuses has grown, electrical apparatuses have been strongly required to achieve higher efficiency. Accordingly, non-oriented electrical steel sheets used for iron cores of electrical motors (motor cores) have also been required to have superior magnetic properties.

A motor core comprises a stator core and a rotor core. To meet the recent demand for downsized and higher-output of HEV driving motors etc., non-oriented electrical steel sheets used for stator cores are strongly required to have the excellent magnetic properties of high magnetic flux density and low iron loss.

Incidentally, recent years have also seen growing demand for reducing the noise and vibration of HEV driving motors etc. Causes of the noise and vibration of a motor include cogging torque in an unexcited state, torque ripples in an excited state, and the like. In addition, magnetostriction of a non-oriented electrical steel sheet used as an iron core material of a motor is also known to cause noise and vibration of a motor.

In the motor core, multiple non-oriented electrical steel sheets processed into the cross-sectional shape of the motor core are laminated and fixed by staking, welding, bolt fastening, or the like. Here, when the stator core is excited, the non-oriented electrical steel sheets undergo elongation and contraction due to magnetostriction, and this elongation and contraction propagates from the stator core to the motor case, becoming emitted as a vibration sound.

Therefore, to reduce the noise and vibration of a motor due to magnetostriction, it is desirable to reduce the magnetostriction of the non-oriented electrical steel sheet used for the iron core as much as possible. As a technology to reduce the magnetostriction of a non-oriented electrical steel sheet, for example, Patent Literature 1 discloses a technology that reduces a magnetostriction constant $\lambda_{100}$ by adjusting the steel components.

Citation List

Patent Literature

Patent Literature 1: JP-2010-248559A

Summary of Invention

Technical Problem

However, one problem with the above-described technology disclosed in Patent Literature 1 is that it involves adjusting the balance between Si and Al to reduce the magnetostriction constant $\lambda_{100}$, and thus has difficulty in reconciling the magnetostriction property and the motor core's iron loss property. Another problem is that reducing the magnetostriction constant $\lambda_{100}$ does not necessarily lead to lower noise and vibration of the motor core.

Having been developed in view of these problems with the related art, the present invention aims to provide a non-oriented electrical steel sheet with small magnetostriction that is effective in reducing the noise and vibration of electrical motors.

Solution to Problem

Aiming at solving the above-described problems, the present inventors vigorously conducted studies with a focus on magnetostriction deformation in an excitation process of a back yoke part of a stator core. As a result, the inventors found that a low-noise, low-vibration electrical motor could be manufactured by reducing an in-plane average value of magnetostrictions in directions perpendicular to the respective magnetic field directions and parallel to the rolling plane resulting from applying an alternating-current magnetic field in a rolling direction, a sheet width direction (a direction at right angle to rolling), and a direction forming an angle of 45° with the rolling direction, of a non-oriented electrical steel sheet constituting a material of a motor core. This finding led us to develop the present invention.

Specifically, the present invention is a non-oriented electrical steel sheet having a chemical composition containing C: 0.0050 mass% or less, Si: 2.0 to 5.0 mass%, Mn: 2.0 mass% or less, P: 0.20 mass% or less, S: 0.0050 mass% or less, Al: 2.0 mass% or less, N: 0.0050 mass% or less, Ti: 0.0030 mass% or less, Nb: 0.0010 mass% or less, V: 0.0050 mass% or less, and O: 0.0050 mass% or less, with the balance being Fe and unavoidable impurities, the non-oriented electrical steel sheet being characterized in that when an alternating-current magnetic field with a frequency of 50 Hz and a maximum magnetic flux density $B_m$ of 1.5 T is applied in a rolling direction ($^{RD}$), a sheet width direction ($^{TD}$), and a direction ($^{DD}$) forming an angle of 45° with the rolling direction, in a rolling plane of the steel sheet, and zero-peak values of resulting magnetostrictions in directions perpendicular to the respective magnetic field directions and parallel to the rolling plane are represented as $\lambda_{\perp H}^{RD}$, $\lambda_{\perp H}^{TD}$, and $\lambda_{\perp H}^{DD}$, respectively, an absolute value of a magnetostriction in-plane average value $\lambda_{\perp H}^{ave}$ defined by the following Formula (1) is $5 \times 10^{-6}$ or smaller.

$$\lambda_{\perp H}^{ave} = \frac{\lambda_{\perp H}^{RD} + 2\lambda_{\perp H}^{DD} + \lambda_{\perp H}^{TD}}{4} \quad \cdots \quad (1)$$

The non-oriented electrical steel sheet of the present invention is characterized by containing, in addition to the chemical composition, a component of at least one group among the following groups A to L:

- Group A; at least one type selected from Sn: 0.005 to 0.20 mass% and Sb: 0.005 to 0.20 mass%
- Group B; at least one type selected from Ca: 0.0005 to 0.100 mass%, Mg: 0.0005 to 0.100 mass%, and REM: 0.0005 to 0.100 mass%
- Group C; at least one type selected from Cr: 0.01 to 1.0 mass% and Cu: 0.01 to 1.0 mass%
- Group D; Ni: 0.01 to 1.0 mass%
- Group E; at least one type selected from Mo: 0.0005 to 0.1 mass% and W: 0.001 to 0.1 mass%
- Group F; Co: 0.01 to 1.0 mass%
- Group G; at least one type selected from As: 0.001 to 0.05 mass% and B: 0.0001 to 0.005 mass%
- Group H; Pb: 0.00001 to 0.010 mass%
- Group I; Zn: 0.0001 to 0.02 mass%
- Group J; Ta: 0 to 0.0020 mass%
- Group K; at least one type selected from Zr: 0 to 0.0050 mass%, Se: 0 to 0.0050 mass%, and Bi: 0 to 0.0020 mass%
- Group L; at least one type selected from Ge: 0 to 0.030 mass% and Ga: 0 to 0.030 mass%.

Advantageous Effects of Invention

The present invention makes it possible to manufacture a low-noise, low-vibration electrical motor.

Brief Description of Drawings

[Fig. 1] is a schematic view illustrating the structure of a ring core used to study noise.
[Fig. 2] is a graph showing an influence that a magnetic field applied in a sheet thickness direction during finishing annealing has on magnetostriction of a product sheet in a direction perpendicular to a magnetic field direction and parallel to a rolling plane.
[Fig. 3] is a graph showing an influence that an in-plane average value $\lambda_{\perp H}^{ave}$ of magnetostrictions of the product sheet in directions perpendicular to the magnetic field directions and parallel to the rolling plane has on the noise of the ring core.

Description of Embodiment

First, an experiment that inspired the development of the present invention will be described.
A steel slab having a chemical composition containing C: 0.001 mass%, Si: 3.2 mass%, Mn: 0.6 mass%, P: 0.01 mass%, S: 0.0020 mass%, Al: 0.50 mass%, N: 0.0015 mass%, Ti: 0.0010 mass%, Nb: 0.0001 mass%, V: 0.0005 mass%, and O: 0.0010 mass%, with the balance being Fe and unavoidable impurities, was hot-rolled into a hot-rolled sheet with a sheet thickness of 1.8 mm. The hot-rolled sheet was then subjected to hot-rolled sheet annealing of 950°C×30s, pickled, cold-rolled for the first time, subjected to intermediate annealing of 900°C×30s, and then cold-rolled for the second time with a rolling reduction set to 60% into a cold-rolled sheet with a final sheet thickness of 0.25 mm. This cold-rolled sheet was rapidly heated through a temperature region of 200°C to 700°C at an average heating rate of 100°C/s, and in this temperature region, direct-current magnetic fields of varying magnitudes were applied in the sheet thickness direction.

Thereafter, the steel sheet was heated from 700°C to 980°C without being cooled, and was subjected to finishing annealing of 980°C×10s.

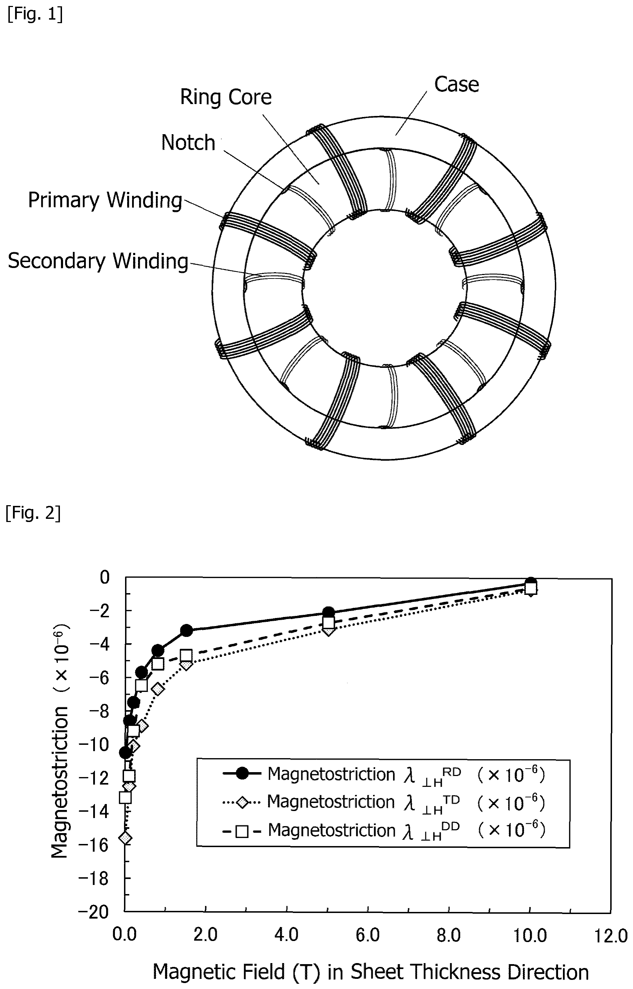

From the finishing-annealed steel sheet thus obtained, test pieces having a ring shape with an outside diameter of 80 mm and an inside diameter of 60 mm and having notches at eight positions in the ring outer circumference as shown in Fig. 1 were sampled by punching. Next, 100 sheets of the ring-shaped test pieces were laminated in the sheet thickness direction and fixed at six positions by V-staking to produce a ring core. Thereafter, this ring core was shrink-fitted into an aluminum-alloy case having a thickness of 3 mm and an inside diameter of 80 mm, with a shrink-fit allowance of 40 $\mu$m.

Thereafter, a primary winding and a secondary winding were wound around the ring core as shown in Fig. 1, and then the ring core was excited at a frequency of 50 Hz and a maximum magnetic flux density $B_m$ of 1.5 T. Meanwhile, the noise level of the ring core was measured by installing a noise level meter at a position 50 mm away from the case outer circumference.

Further, rectangular test pieces measuring 30 mm wide by 280 mm long were cut out from the finishing-annealed steel sheet such that the rolling direction, the sheet width direction, and a direction forming an angle of 45° with the rolling direction constituted the respective length directions, and were excited by applying an alternating-current magnetic field with a frequency of 50 Hz and a maximum magnetic flux density $B_m$ of 1.5 T in the length directions of the respective test pieces. The zero-peak values of the resulting magnetostrictions in directions perpendicular to the respective magnetic field directions and parallel to the rolling plane were measured using a strain gauge. In the present invention, the zero-peak values of magnetostrictions in the directions perpendicular to the respective magnetic field directions and parallel to the r rolling plane resulting from exciting the steel sheet in each of the rolling direction, the sheet width direction, and the direction forming an angle of 45° with the rolling direction are represented as $\lambda_{\perp H}^{RD}$, $\lambda_{\perp H}^{TD}$, and $\lambda_{\perp H}^{DD}$, respectively.

Fig. 2 shows a relationship between the magnitude of a direct-current magnetic field applied in the sheet thickness direction during finishing annealing and the zero-peak values $\lambda_{\perp H}^{RD}$, $\lambda_{\perp H}^{TD}$, and $k_{\perp H}^{DD}$ of magnetostrictions in the directions perpendicular to the respective magnetic field directions and parallel to the rolling plane that were measured by the above-described method. It can be seen from this graph that as the magnetic field applied in the sheet thickness direction during finishing annealing becomes higher, the absolute values of the zero-peak values of the magnetostrictions of the product sheet in the directions perpendicular to the respective magnetic field directions and parallel to the rolling plane become smaller.

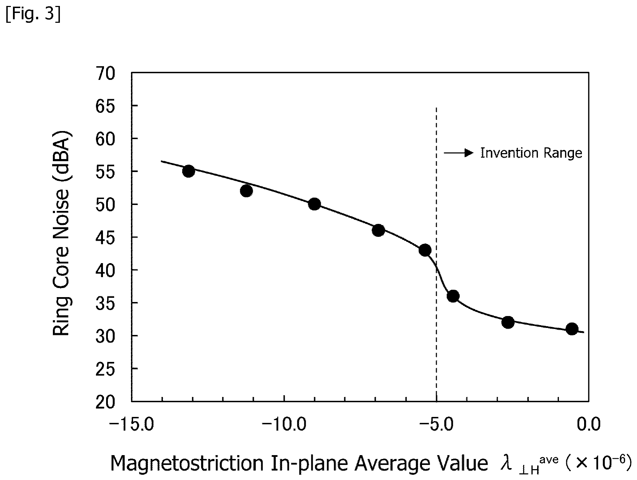

Fig. 3 shows a relationship between an average value $1_{1u}a''$, defined by Formula (1) below,

$$\lambda_{\perp H}^{ave} = \frac{\lambda_{\perp H}^{RD} + 2\lambda_{\perp H}^{DD} + \lambda_{\perp H}^{TD}}{4} \quad \cdots \quad (1)$$

of magnetostrictions of the product sheet in the rolling plane in the directions perpendicular to the respective magnetic field directions and parallel to the rolling plane (in the present invention, also referred to as "in-plane average value") and a noise level measured at the ring core. It can be seen from this graph that as the absolute value of the magnetostriction in-plane average value $\lambda_{\perp H}^{ave}$ becomes smaller, the noise becomes lower.

While the mechanism of how the magnetostriction in-plane average value $\lambda_{\perp H}^{ave}$ influences the noise of the shrink-fitted ring core has not yet been fully elucidated, the present inventors speculate as follows:

When a ring core is excited by an alternating current, the ring core is excited in the circumferential direction and, due to magnetostriction, undergoes elongation and contraction in a direction perpendicular to the magnetic field direction and parallel to the rolling plane, i.e., the radial direction of the ring core. The angle that the circumferential direction of the ring core forms with the rolling direction of the material steel sheet varies according to the position. As magnetostriction of a non-oriented electrical steel sheet generally has anisotropy in the rolling plane, the amount of elongation and contraction in the radial direction varies according to the position in the circumferential direction. Therefore, when the anisotropy of magnetostriction is strong, the amount of elongation and contraction in the radial direction becomes large at some positions and small at other positions in the circumferential direction of the ring core. If such non-uniformity occurs, the symmetry of vibration of the ring core becomes disturbed, so that a peak of characteristic vibration that does not appear when there is no anisotropy of magnetostriction occurs, which seems to add to the vibration, thereby increasing the noise. Therefore, to reduce the noise and vibration of the ring core by reducing the amount of elongation and contraction thereof in the radial direction, it is considered to be effective to reduce the magnetostriction in the direction perpendicular to the magnetic field direction and parallel to the rolling plane along the entire ring core in the circumferential direction, i.e., to reduce the absolute value of the magnetostriction in-plane average value $\lambda_{\perp H}^{ave}$.

The present invention has been developed based on this novel insight.

Next, purposes of the non-oriented electrical steel sheet of the present invention will be described.

The non-oriented electrical steel sheet of the present invention is characterized by having the effect of suppressing the increase in noise and vibration attributable to compressive stress caused by magnetostriction, and therefore can be advantageously used for stator cores. However, this does not restrict its application to rotor cores. Therefore, a stator core and a rotor core may be obtained at the same time from the non-oriented electrical steel sheet of the present invention.

Next, a chemical composition of the non-oriented electrical steel sheet of the present invention will be described.

C: 0.0050 mass% or less

C contained in the product sheet is a harmful element that causes magnetic aging and forms carbides, thereby degrading the iron loss property. Therefore, the upper limit of C contained in the material is restricted to 0.0050 mass%. C is preferably 0.0040 mass% or less. While the lower limit of C is not particularly specified, from the viewpoint of reducing the decarburization cost in a refining step, the lower limit is preferably approximately 0.0001 mass%.

Si: 2.0 to 5.0 mass%

As Si has an effect of increasing the specific resistance of steel to reduce the iron loss and an effect of increasing the strength of steel by solid-solution strengthening, it is contained in an amount of 2.0 mass% or more. On the other hand, when Si exceeds 5.0 mass%, rolling becomes difficult; therefore, the upper limit is 5.0 mass%. Si is preferably within a range of 2.8 to 4.5 mass%. Si is more preferably within a range of 3.2 to 4.0 mass%.

Mn: 2.0 mass% or less

Like Si, Mn is an element effective for increasing the specific resistance and the strength of steel. Mn is also an element that improves hot workability. However, adding Mn in excess of 2.0 mass% causes slab cracking etc. and degrades the operability in the steel manufacturing step; therefore, the upper limit is 2.0 mass%. Mn is preferably within a range of 0.1 to 1.5 mass%.

P: 0.20 mass% or less

P is a useful element used to adjust the strength (hardness) of steel. However, when P exceeds 0.20 mass%, the steel becomes brittle and difficult to roll; therefore, the upper limit is 0.20 mass%. While the lower limit is not particularly specified, from the viewpoint of reducing the dephosphorization cost in the refining step, the lower limit is preferably approximately 0.001 mass%. P is preferably within a range of 0.01 to 0.1 mass%.

S: 0.0050 mass% or less

S is an element that forms fine precipitates and hinders grain growth during finishing annealing and stress-relief annealing, thereby adversely affecting the iron loss property. In particular, when the content exceeds 0.0050 mass%, this adverse effect becomes noticeable; therefore, the upper limit is restricted to 0.0050 mass%. S is preferably 0.003 mass% or less.

Al: 2.0 mass% or less

Like Si, Al is a useful element that has the effects of increasing the specific resistance of steel and reducing the iron loss. However, when Al exceeds 2.0 mass%, the steel becomes brittle and difficult to roll; therefore, the upper limit of Al is 2.0 mass%. Al is preferably 1.5 mass% or less. When Al is too little, the effect of increasing the specific resistance becomes weak; therefore, the content is preferably 0.1 mass% or more.

N: 0.0050 mass% or less

N is an element that forms fine precipitates and hinders grain growth during finishing annealing and stress-relief annealing, thereby adversely affecting the iron loss property. In particular, when the content exceeds 0.0050 mass%, this adverse effect becomes noticeable; therefore, the upper limit is restricted to 0.0050 mass%. N is preferably 0.003 mass% or less.

Ti: 0.0030 mass% or less

Similarly, Ti is an element that forms fine precipitates and hinders grain growth during finishing annealing and stress-relief annealing, thereby adversely affecting the iron loss property. In particular, when the content exceeds 0.0030 mass%, this adverse effect becomes noticeable; therefore, the upper limit is restricted to 0.0030 mass%. Ti is preferably 0.002 mass% or less.

Nb: 0.0010 mass% or less

Like Ti, Nb is an element that forms fine precipitates and hinders grain growth during finish annealing and stress-relief annealing, thereby adversely affecting the iron loss property. In particular, when Nb exceeds 0.0010 mass%, this adverse effect becomes noticeable; therefore, the upper limit is restricted to 0.0010 mass%. Nb is preferably 0.0005 mass% or less.

V: 0.0050 mass% or less

Like Ti and Nb, V is an element that forms fine precipitates and hinders grain growth during finishing annealing and stress-relief annealing, thereby adversely affecting the iron loss property. In particular, when V exceeds 0.0050 mass%, this adverse effect becomes noticeable; therefore, the upper limit is restricted to 0.0050 mass%. V is preferably 0.0003 mass% or less.

O: 0.0050 mass% or less

O is a harmful element that forms oxide-based inclusions and hinders grain growth, thereby increasing the iron loss. In particular, when O exceeds 0.0050 mass%, this adverse effect becomes noticeable; therefore, the upper limit is 0.0050 mass%. O is preferably 0.0030 mass% or less.

The balance of the steel material used to manufacture the non-oriented electrical steel sheet of the present invention other than the above-described components is substantially Fe and unavoidable impurities. However, in addition to the above-described components, the following components can be contained as appropriate according to the required properties.

At least one type selected from Sn: 0.005 to 0.20 mass% and Sb: 0.005 to 0.20 mass%

Sn and Sb have an effect of improving the recrystallization texture and reducing the iron loss. Obtaining this effect requires adding each of Sn and Sb in an amount of 0.005 mass% or more. On the other hand, adding each of Sn and Sb in excess of 0.20 mass% saturates this effect. Therefore, Sn and Sb are preferably each added within a range of 0.005 to 0.20 mass%. Sn and Sb are more preferably each added within a range of 0.01 to 0.10 mass%.

At least one type selected from Ca: 0.0005 to 0.100 mass%, Mg: 0.0005 to 0.100 mass%, and REM: 0.0005 to 0.100 mass%

Ca, Mg, and REM have an effect of promoting grain growth and improving the iron loss property by forming stable sulfides and reducing fine sulfides. Obtaining this effect requires adding each of Ca, Mg, and REM in an amount of 0.0005 mass% or more. On the other hand, adding each of Ca, Mg, and REM in excess of 0.100 mass% conversely worsens the iron loss. Therefore, Ca, Mg, and REM are preferably each added within a range of 0.0005 to 0.100 mass%. Ca, Mg, and REM are more preferably each within a range of 0.001 to 0.05 mass%.

In addition to the above-described components, the steel material used to manufacture the non-oriented electrical steel sheet of the present invention can contain the following components as appropriate. However, as the raw material costs of these components are relatively high, it is desirable to reduce the amounts added to the minimum necessary.

At least one type selected from Cr: 0.01 to 1.0 mass% and Cu: 0.01 to 1.0 mass%

Like Si and Al, Cr and Cu have an effect of increasing the specific resistance of steel and reducing the iron loss. However, Cr and Cu have lower solid-solution strengthening capabilities compared with Si and Al, and are therefore preferably added when the iron loss is desired to be reduced without the rollability being degraded. However, when the amount of each of Cr and Cu added is less than 0.01 mass%, the above-described effect cannot be fully obtained, whereas when the amount exceeds 1.0 mass%, the iron loss improving effect saturates. Therefore, Cr and Cu are preferably each added within a range of 0.01 to 1.0 mass%.

Ni: 0.01 to 1.0 mass%

Ni is an element that has a high solid-solution strengthening capability and is effective for increasing the strength of steel. However, when the amount added is less than 0.01 mass%, this effect cannot be fully obtained, whereas when the amount exceeds 1.0 mass%, the raw material cost increases. Therefore, Ni is preferably added within a range of 0.01 to 1.0 mass%.

At least one type selected from Mo: 0.0005 to 0.1 mass% and W: 0.001 to 0.1 mass%

Mo and W have an effect of coarsening carbides and reducing the iron loss. However, when the amount of Mo added is less than 0.0005 mass% and the amount of W added is 0.001 mass% or less, this effect cannot be fully obtained, whereas when the amount of each of Mo and W added exceeds 0.1 mass%, this iron loss improving effect saturates. Therefore, Mo and W are preferably added within ranges of 0.0005 to 0.1 mass% and 0.001 to 0.1 mass%, respectively.

Co: 0.01 to 1.0 mass%

Co has effects of increasing the magnetic flux density and reducing the iron loss by increasing the magnetic moment of an Fe alloy. However, when the amount added is less than 0.01 mass%, this effect cannot be fully obtained, whereas when the amount exceeds 1.0 mass%, the raw material cost increases. Therefore, Co is preferably added within a range of 0.01 to 1.0 mass%.
At least one type selected from As: 0.001 to 0.05 mass% and B: 0.0001 to 0.005 mass%
As and B are grain boundary segregation elements and have an effect of reducing the iron loss through improvement of the texture. This effect is obtained by adding As: 0.001 mass% or more and B: 0.0001 mass% or more. However, As is an element that also causes grain boundary embrittlement, and particularly this harmful effect becomes noticeable when As exceeds 0.05 mass%. Therefore, As is preferably added within a range of 0.001 to 0.05 mass%. When B exceeds 0.005 mass%, its adverse effect of inhibiting grain boundary migration becomes strong. Therefore, B is preferably added within a range of 0.0001 to 0.005 mass%.

Pb: 0.00001 to 0.010 mass%

Pb is an element that is finely dispersed in steel as metal inclusions, and remains in the steel even after finishing annealing. Thus, during punching, Pb forms a starting point of stress concentration, promotes progress of cracks, and mitigates wearing of the die, thereby improving the punchability. However, when Pb is less than 0.00001 mass%, this punchability improving effect cannot be fully obtained, whereas when Pb exceeds 0.010 mass%, a grain growth inhibiting force becomes so strong that favorable iron loss cannot be achieved. Therefore, Pb is within a range of 0.00001 to 0.010 mass%. Pb is preferably within a range of 0.00003 to 0.0050 mass%.

Zn: 0.0001 to 0.02 mass%

Zn has an effect of improving grain growth and reducing a magnetic domain-wall pinning force by forming stable and coarse sulfides or oxides. Obtaining this effect requires adding Zn in an amount of 0.0001 mass% or more. However, adding Zn in excess of 0.02 mass% saturates this effect. Therefore, Zn is preferably within a range of 0.0001 to 0.02 mass%.

Ta: 0 to 0.0020 mass%

Ta is an element effective for improving the workability and enhancing the strength of steel and can be added as appropriate. To reliably obtain this effect, Ta is preferably added in an amount of 0.0001 mass% or more. On the other hand, Ta is an element that increases the iron loss, and particularly when Ta exceeds 0.0020 mass%, this adverse effect becomes noticeable; therefore, the upper limit is preferably 0.0020 mass%. Ta is more preferably within a range of 0.0003 to 0.0010 mass%.
At least one type selected from Zr: 0 to 0.0050 mass%, Se: 0 to 0.0050 mass%, and Bi: 0 to 0.0020 mass%
Zr, Se, and Bi are all elements that are finely dispersed in steel as inclusions to improve the workability, as well as refine the crystal grains to increase the strength of the steel, and therefore can be added as appropriate. However, when each of Zr and Se exceeds 0.0050 mass% and Bi exceeds 0.0020 mass%, the grain growth inhibiting force becomes so strong that favorable iron loss cannot be achieved; therefore, these values are preferably set as upper limit values. More preferable ranges are: Zr: 0.0005 to 0.0030 mass%, Se: 0.0001 to 0.0030 mass%, and Bi: 0.0001 to 0.0010 mass%.
At least one type selected from Ge: 0 to 0.030 mass% and Ga: 0 to 0.030 mass%
Ge and Ga are both elements that improve the texture. To reliably obtain this effect, Ge and Ga are preferably each added in an amount of 0.001 mass% or more. On the other hand, adding each of Ge and Ga in excess of 0.030 mass% saturates the aforementioned effect; therefore, the upper limit is preferably 0.030 mass%. Ge and Ga are more preferably each within a range of 0.003 to 0.010 mass%.
Next, the magnetostriction properties of the non-oriented electrical steel sheet of the present invention will be described.
Absolute value of magnetostriction in-plane average value $\lambda_{\perp H}^{ave}$: $5\times10^{-6}$ or smaller
In the back yoke part of the stator core, the steel sheet is excited mainly in the circumferential direction, and thus the back yoke part is excited in every direction in the rolling plane of the steel sheet depending on its position. When excited, the steel sheet elongates and contracts in a direction perpendicular to the direction of excitation (magnetic field direction) and parallel to the rolling plane. In this case, if the magnetostriction in each direction in the rolling plane of the steel sheet resulting from the excitation is large, the elongation and contraction in the direction perpendicular to the excitation direction, i.e., the radial direction becomes non-uniform among positions in the back yoke. Then, a peak of characteristic vibration that does not appear when there is no non-uniformity due to magnetostriction occurs during excitation, which increases the vibration as well as the noise of the motor core. In particular, when the absolute value of the magnetostriction average value $\lambda_{\perp H}^{ave}$ exceeds $5 \times 10^{-6}$, the noise increases significantly as shown in Fig. 3. In the present invention, therefore, the absolute value of the magnetostriction average value $\lambda_{\perp H}^{ave}$ is restricted to $5 \times 10^{-6}$ or smaller. It is more preferable that the absolute value of the magnetostriction average value $k_{\perp H}^{ave}$ be $3 \times 10^{-6}$ or smaller because then the reducing effect on the vibration of the motor core becomes stronger.

The magnetostriction in-plane average value $\lambda_{\perp H}^{ave}$ is defined by the following Formula (1).

$$\lambda_{\perp H}^{ave} = \frac{\lambda_{\perp H}^{RD} + 2\lambda_{\perp H}^{DD} + \lambda_{\perp H}^{TD}}{4} \quad \cdots \quad (1)$$

Here, $\lambda_{\perp H}^{RD}$, $\lambda_{\perp H}^{TD}$, and $\lambda_{\perp H}^{DD}$ in the above Formula are zero-peak values of magnetostrictions in directions perpendicular to the respective magnetic field directions and parallel to the rolling plane resulting from exciting the steel sheet at a frequency of 50 Hz and a maximum magnetic flux density $B_m$ of 1.5 T in the rolling direction ($^{RD}$), the sheet width direction ($^{TD}$), and the direction ($^{DD}$) forming an angle of 45° with the rolling direction, in the rolling plane of the steel sheet.

Next, a manufacturing method of the non-oriented electrical steel sheet of the present invention will be described. In the manufacturing method to be described below, steps other than finishing annealing are one example of methods and conditions for manufacturing the non-oriented electrical steel sheet of the present invention, and it is not intended to reject manufacturing by different methods and conditions.

First, steel having a chemical composition complying with the above-described present invention is smelted by a commonly known ordinary refining process using a converter, an electrical furnace, a vacuum degassing apparatus, etc., and is then turned into a steel material (slab) by a continuous casting method or an ingot making-blooming method. This slab is hot-rolled by commonly known ordinary method and conditions into a hot-rolled sheet.

Among the elements that can be contained in the steel material used in the present invention, elements such as Cu, Sn, Ni, Cr, and Mo are elements that get mixed in from raw material scrap while steel is smelted by an electrical furnace. Therefore, when using electrical furnace steel, these elements need not be reduced nor be purposefully add, which contributes to reducing the raw material cost and the refining cost. For casting and hot rolling of the smelted steel, a thin-slab continuous caster having a continuous caster and a hot-rolling machine directly coupled to each other may be used. The thin-slab continuous caster can cast a thin slab with a slab thickness of 200 mm or smaller and immediately hot-roll it by the hot-rolling machine directly coupled to the casting facility, and can thereby achieve a smaller finish thickness than ordinary hot rolling. As a result, the rolling load in the subsequent cold rolling is reduced and the productivity improves, as well as the texture is improved by a decrease in the cold-rolling reduction, which is effective for reducing the iron loss.

The hot-rolled sheet may be subjected to hot-rolled sheet annealing as necessary, and the soaking temperature in that case is preferably within a range of 800 to 1100°C. If the soaking temperature is lower than 800°C, the effect of hot-rolled sheet annealing is too weak to fully obtain the magnetic property improving effect. On the other hand, a soaking temperature exceeding 1100°C may be disadvantageous in terms of the manufacturing cost or may promote brittle fracture (sheet breakage) during cold rolling.

Thereafter, the hot-rolled sheet after the hot rolling or the hot-rolled sheet annealing is cold-rolled once, or cold-rolled twice or more times with intermediate annealing between each rolling, into a cold-rolled sheet with a final sheet thickness. Here, for the cold rolling to achieve the final sheet thickness, warm rolling that rolls the steel sheet with the temperature thereof raised to 200°C or higher is preferably adopted from the viewpoint of increasing the magnetic flux density.

It is preferable that the final sheet thickness (product sheet thickness) be within a range of 0.1 to 0.3 mm. If the thickness is smaller than 0.1 mm, the productivity decreases, whereas if the thickness exceeds 0.3 mm, the iron loss reducing effect is weak.

The cold-rolled sheet reduced to the final sheet thickness is thereafter subjected to finishing annealing, for which conditions are preferably continuous annealing that involves soaking at a temperature of 700 to 1100°C for 1 to 300 s. If the soaking temperature is lower than 700°C, recrystallization does not progress enough, so that favorable magnetic properties cannot be obtained, and moreover the shape correcting effect of continuous annealing cannot be fully obtained. On the other hand, if the soaking temperature exceeds 1100°C, the crystal grains coarsen and the steel sheet strength decreases.

In the heating process of the finishing annealing, it is preferable that rapid heating at 100°C/s or more be performed through a temperature region of 200°C to 700°C. Setting the heating rate to 100°C/s or higher can randomize the nucleation orientation of primary recrystallized grains and reduce the absolute value of the magnetostriction in-plane average value $\lambda_{\perp H}^{ave}$. If the heating rate is less than 100°C/s, this randomizing effect cannot be fully obtained. The heating rate is preferably 500°C/s or more. While the upper limit of the heating rate is not particularly specified, it is preferably about 2000°C/s from a viewpoint that increasing the heating rate to above 2000°C/s saturates the magnetostriction reducing effect, and a viewpoint of avoiding excessive energy consumption.

Here, what is important in the present invention is that it is necessary to apply a direct-current magnetic field in the sheet thickness direction in a temperature region of 200°C to 700°C in the heating process of the finishing annealing. Primary recrystallization of a cold-rolled structure occurs at a temperature of 500°C or higher, particularly 600°C or higher. Therefore, when a direct-current magnetic field is applied in the sheet thickness direction in a temperature region of 500°C to 700°C, nucleation occurs preferentially in a crystal orientation that has an axis of easy magnetization in the sheet thickness direction, and the axis of easy magnetization in the rolling plane becomes random, which can further reduce the absolute value of the magnetostriction in-plane average value $\lambda_{\perp H}^{ave}$.

The temperature region for applying a direct-current magnetic field is preferably 600°C or higher where spontaneous magnetization of steel is weak, from the viewpoints of sufficiently securing the reducing effect on the absolute value of the in-plane average value $\lambda_{\perp H}^{ave}$ of magnetostriction due to the direct-current magnetic field, reducing the magnetic field force generated in the steel sheet by the direct-current magnetic field, and preventing the steel sheet from departing from the transfer line. The strength of the magnetic field to be applied need be 1 T or higher, and is preferably 5 T or higher to further enhance this effect.

Next, to secure insulation properties when using the steel sheets as laminated, it is preferable that an insulation coating be formed on the surface of the finishing-annealed steel sheet. It is desirable to select, as this insulation coating, an organic film containing resin when favorable punchability is desired to be secured, and a semi-organic or inorganic film when importance is placed on weldability.

When manufacturing a stator core using the non-oriented electrical steel sheet of the present invention as the iron core material, common practice is to process the finishing-annealed steel sheet into a core shape by punching or the like, laminate the steel sheets, and fixing them to assemble a stator core, and then subject it to stress-relief annealing. This stress-relief annealing is preferably performed in an inert gas atmosphere, under the conditions of 780 to 950°C×0.1 to 10 hr. If the stress-relief annealing temperature is lower than 780°C, the iron loss improving effect by stress-relief annealing is weak, whereas if the temperature exceeds 950°C, it becomes difficult to secure insulation between the laminated steel sheets.

Example 1

A steel slab having a chemical composition containing C: 0.001 mass%, Si: 3.4 mass%, Mn: 0.4 mass%, P: 0.01 mass%, S: 0.0020 mass%, Al: 0.80 mass%, N: 0.0015 mass%, Ti: 0.0010 mass%, Nb: 0.0001 mass%, V: 0.0005 mass%, and O: 0.0010 mass%, with the balance being Fe and unavoidable impurities, was hot-rolled into a hot-rolled sheet with a sheet thickness of 1.8 mm. Next, this hot-rolled sheet was subjected to hot-rolled sheet annealing of 950°C×30s, pickled, cold-rolled for the first time, subjected to intermediate annealing of 900°C×30s, and then cold-rolled for the second time with a rolling reduction set to 60% into a cold-rolled sheet with a final sheet thickness of 0.25 mm. Thereafter, this cold-rolled sheet was rapidly heated through a temperature region of 200°C to 700°C at an average heating rate of 1000°C/s, and in this temperature region, direct-current magnetic fields with the magnitude varying from 0 to 20 T were applied in the sheet thickness direction. Thereafter, the steel sheet was heated from 700°C to 980°C, without being cooled, and subjected to finishing annealing of 980°C×10s, and then an insulation coating was formed thereon to obtain a product sheet.

From the product sheet thus obtained, test pieces having a ring shape with an outside diameter of 80 mm and an inside diameter of 60 mm and having notches at eight positions in the ring outer circumference as shown in Fig. 1 were punched out. Then, 100 sheets of the test pieces were laminated in the sheet thickness direction and fixed at six positions by V-staking to produce a ring core. Next, this ring core was shrink-fitted into an austenitic stainless-steel case having a thickness of 3 mm and an inside diameter of 80 mm, with a shrink-fit allowance of 40 $\mu$m. Thereafter, a primary winding and a secondary winding were wound around the shrink-fitted ring core as shown in Fig. 1, and then the ring core was excited at a frequency of 50 Hz and a maximum magnetic flux density $B_m$ of 1.5 T. Meanwhile, a noise level meter was installed at a position 50 mm away from the case outer circumference and the noise of the ring core during the excitation was measured. While the noise level differs depending on the sheet thickness and the dimensions of the ring core, in the case of the ring core produced from a product sheet with a sheet thickness of 0.25 mm, having a noise level of 40 dBA or lower can be deemed as being excellent in noise property.

Further, rectangular test pieces measuring 30 mm wide by 280 mm long were cut out from the product sheet such that the rolling direction, the sheet width direction, and the direction at 45° from the rolling direction constituted the respective length directions, and were excited in the length directions at a frequency of 50 Hz and a maximum magnetic flux density $B_m$ of 1.5 T. The zero-peak values $\lambda_{\perp H}^{RD}$, $\lambda_{\perp H}^{TD}$, and $\lambda_{\perp H}^{DD}$ of the resulting magnetostrictions in the directions perpendicular to the respective magnetic field directions and parallel to the rolling plane were measured using a strain gauge, and the magnetostriction in-plane average value $\lambda_{\perp H}^{ave}$ was obtained by the following Formula (1).

$$\lambda_{\perp H}^{ave} = \frac{\lambda_{\perp H}^{RD} + 2\lambda_{\perp H}^{DD} + \lambda_{\perp H}^{TD}}{4} \quad \cdots \quad (1)$$

The result of this measurement is shown in Table 1. From this table, it can be seen that the ring cores produced using the non-oriented electrical steel sheet manufactured under conditions complying with the present invention each have excellent noise property.

[Table 1]

| № | Magnetic field (T) applied in sheet thickness direction | Magnetostriction properties | | | | Ring core properties | |
|---|---|---|---|---|---|---|---|
| | | Magnetostriction $\lambda_{\perp H}^{RD}$ ($\times 10^{-5}$) | Magnetostriction $\lambda_{\perp H}^{TD}$ ($\times 10^{-5}$) | Magnetostriction $\lambda_{\perp H}^{DD}$ ($\times 10^{-5}$) | Magnetostriction average value $\lambda_{\perp H}^{ave}$ ($\times 10^{-5}$) | Hysteresis loss $W_{hys}$ (W/kg) | Noise level (dBA) |
| 1 | 0.0 | -11.2 | -16.1 | -15.1 | -14.4 | 15.8 | 58 |
| 2 | 0.1 | -9.1 | -12.8 | -12.4 | -11.7 | 15.7 | 54 |
| 3 | 0.2 | -7.3 | -10.4 | -10.1 | -9.5 | 15.9 | 51 |
| 4 | 0.4 | -5.9 | -8.8 | -7.2 | -7.3 | 15.6 | 46 |
| 5 | 0.8 | -4.8 | -7.1 | -6.4 | -6.2 | 15.6 | 43 |
| 6 | 1.0 | -3.9 | -5.6 | -5.0 | -4.9 | 15.7 | 39 |
| 7 | 1.5 | -3.3 | -5.1 | -4.4 | -4.3 | 15.8 | 37 |
| 8 | 3.0 | -2.6 | -4.6 | -3.7 | -3.7 | 15.7 | 34 |
| 9 | 5.0 | -1.9 | -3.5 | -3.0 | -2.9 | 15.6 | 30 |
| 10 | 10.0 | -0.5 | -0.8 | -0.7 | -0.7 | 15.7 | 29 |
| 11 | 20.0 | -0.4 | -0.5 | -0.5 | -0.475 | 15.8 | 28 |

Example 2

Steel slabs having chemical compositions containing the various components shown in Table 2, with the balance being Fe and unavoidable impurities, were hot-rolled into hot-rolled sheets with a sheet thickness of 1.8 mm. Next, these hot-rolled sheets were subjected to hot-rolled sheet annealing of 950°C×30s, pickled, cold-rolled for the first time, subjected to intermediate annealing of 900°C×30s, and then cold-rolled for the second time with a rolling reduction set to 55% into cold-rolled sheets with a final sheet thickness of 0.25 mm. Next, these cold-rolled sheets were rapidly heated through a temperature region of 200°C to 700°C at an average heating rate of 1000°C/s, and in this temperature region, direct-current magnetic fields with the magnitude varying within a range of 0 to 8 T were applied in the sheet thickness direction. Thereafter, the steel sheets were heated from the temperature of 700°C to 980°C, without being cooled, and subjected to finishing annealing of 980°C×10s, and then an insulation coating was formed thereon to obtain product sheets.

From each of the product sheets thus obtained, test pieces having a ring shape with an outside diameter of 80 mm and an inside diameter of 60 mm and having notches at eight positions in the ring outer circumference as shown in Fig. 1 were punched out. Then, 100 sheets of the test pieces were laminated in the sheet thickness direction and fixed at six positions by welding to produce a ring core. Next, this ring core was shrink-fitted into an austenitic stainless-steel case having a thickness of 3 mm and an inside diameter of 80 mm, with a shrink-fit allowance of 40 $\mu$m. Thereafter, a primary winding and a secondary winding were wound around the shrink-fitted ring core as shown in Fig. 1, and then iron loss $W_{15/50}$ resulting from excitation at a frequency of 50 Hz and a maximum magnetic flux density $B_m$ of 1.5 T was measured. When the iron loss $W_{15/50}$ was 20.0 W/kg or smaller, the iron loss property was evaluated as favorable. Further, noise during the excitation was measured by installing a noise level meter at a position 50 mm away from the case outer circumference. When the noise was 40 dBA or lower, the noise property was evaluated as excellent.

Further, rectangular test pieces measuring 30 mm wide by 280 mm long were cut out from each of the product sheets such that the rolling direction, the sheet width direction, and the direction at 45° from the rolling direction constituted the respective length directions, and were excited at a frequency of 50 Hz and a maximum magnetic flux density $B_m$ of 1.5 T in the length directions. The zero-peak values $\lambda_{\perp H}^{RD}$, $\lambda_{\perp H}^{TD}$, and $\lambda_{\perp H}^{DD}$ of the resulting magnetostrictions in the directions perpendicular to the respective magnetic field directions and parallel to the rolling plane were measured using a strain gauge, and the magnetostriction in-plane average value $\lambda_{\perp H}^{ave}$ was obtained by the following Formula (1).

$$\lambda_{\perp H}^{ave} = \frac{\lambda_{\perp H}^{RD} + 2\lambda_{\perp H}^{DD} + \lambda_{\perp H}^{TD}}{4} \quad \cdots \quad (1)$$

The result of this measurement is shown in Table 2. From this table, it can be seen that the ring cores produced using a non-oriented electrical steel sheet manufactured using a steel material having a chemical composition complying with the present invention and under conditions complying with the present invention each have excellent iron loss property and noise property. The steel sheet No. 20 (Comparative Example) in Table 2 fractured during cold rolling and could not be used as a product sheet.

[Table 2-1]

| No. | Chemical components (mass%) of steel material | | | | | | | | | | | | Magnetic field (T) in sheet thickness direction | Steel sheet properties | Ring core properties | | Remarks |
| | C | Si | Mn | P | S | Al | N | Ti | Nb | V | O | Others | | Magnetostriction average value $\lambda_{\perp H}^{ave}(\times 10^{-6})$ | Noise level (dBA) | Iron loss $W_{10/400}$ (W/kg) | |
|---|---|---|---|---|---|---|---|---|---|---|---|---|---|---|---|---|---|---|
| 1 | 0.001 | 3.0 | 0.8 | 0.01 | 0.0015 | 0.5 | 0.0010 | 0.0005 | 0.0001 | 0.0001 | 0.0005 | - | 0 | -8.1 | 51 | 16.3 | Comparative Example |
| 2 | 0.001 | 3.0 | 0.8 | 0.01 | 0.0015 | 0.5 | 0.0010 | 0.0005 | 0.0001 | 0.0001 | 0.0005 | - | 3 | -3.2 | 34 | 16.4 | Invention Example |
| 3 | 0.001 | 3.0 | 0.8 | 0.01 | 0.0015 | 0.5 | 0.0010 | 0.0005 | 0.0001 | 0.0001 | 0.0005 | - | 8 | -0.3 | 31 | 16.2 | Invention Example |
| 4 | 0.006 | 3.0 | 0.8 | 0.01 | 0.0015 | 0.5 | 0.0010 | 0.0005 | 0.0001 | 0.0001 | 0.0005 | - | 8 | -0.4 | 33 | 22.6 | Comparative Example |
| 5 | 0.001 | 1.8 | 0.8 | 0.01 | 0.0015 | 0.5 | 0.0010 | 0.0005 | 0.0001 | 0.0001 | 0.0005 | - | 8 | -1.2 | 32 | 23.2 | Comparative Example |
| 6 | 0.001 | 2.1 | 0.8 | 0.01 | 0.0015 | 0.5 | 0.0010 | 0.0005 | 0.0001 | 0.0001 | 0.0005 | - | 0 | -7.6 | 48 | 18.7 | Comparative Example |
| 7 | 0.001 | 2.1 | 0.8 | 0.01 | 0.0015 | 0.5 | 0.0010 | 0.0005 | 0.0001 | 0.0001 | 0.0005 | - | 3 | -2.9 | 33 | 18.6 | Invention Example |
| 8 | 0.001 | 2.1 | 0.8 | 0.01 | 0.0015 | 0.5 | 0.0010 | 0.0005 | 0.0001 | 0.0001 | 0.0005 | - | 8 | -0.1 | 29 | 18.8 | Invention Example |
| 9 | 0.001 | 4.5 | 0.8 | 0.01 | 0.0015 | 0.5 | 0.0010 | 0.0005 | 0.0001 | 0.0001 | 0.0005 | - | 0 | -6.9 | 45 | 14.2 | Comparative Example |
| 10 | 0.001 | 4.5 | 0.8 | 0.01 | 0.0015 | 0.5 | 0.0010 | 0.0005 | 0.0001 | 0.0001 | 0.0005 | - | 3 | -0.1 | 30 | 14.1 | Invention Example |
| 11 | 0.001 | 3.0 | 0.2 | 0.01 | 0.0015 | 0.5 | 0.0010 | 0.0005 | 0.0001 | 0.0001 | 0.0005 | - | 0 | -7.9 | 49 | 16.7 | Comparative Example |
| 12 | 0.001 | 3.0 | 0.2 | 0.01 | 0.0015 | 0.5 | 0.0010 | 0.0005 | 0.0001 | 0.0001 | 0.0005 | - | 3 | -3.5 | 36 | 16.7 | Invention Example |
| 13 | 0.005 | 3.0 | 1.5 | 0.10 | 0.0015 | 0.5 | 0.0010 | 0.0005 | 0.0001 | 0.0001 | 0.0005 | - | 0 | -8.4 | 54 | 16.9 | Comparative Example |

(continued)

| No. | Chemical components (mass%) of steel material | | | | | | | | | | | | Magnetic field (T) in sheet thickness direction | Steel sheet properties $\lambda_{\perp H}^{ave}(\times 10^{-6})$ Magnetostriction average value | Ring core properties | | Remarks |
|---|---|---|---|---|---|---|---|---|---|---|---|---|---|---|---|---|---|
| | C | Si | Mn | P | S | Al | N | Ti | Nb | V | O | Others | | | Noise level (dBA) | Iron loss $W_{10/400}$ (W/kg) | |
| 14 | 0.005 | 3.0 | 1.5 | 0.10 | 0.0015 | 0.5 | 0.0010 | 0.0005 | 0.0001 | 0.0001 | 0.0005 | - | 3 | -3.6 | 35 | 16.8 | Invention Example |
| 15 | 0.001 | 3.0 | 1.5 | 0.12 | 0.0015 | 0.5 | 0.0010 | 0.0005 | 0.0001 | 0.0001 | 0.0005 | - | 3 | -3.5 | 35 | 16.7 | Invention Example |
| 16 | 0.001 | 3.0 | 1.5 | 0.19 | 0.0015 | 0.5 | 0.0010 | 0.0005 | 0.0001 | 0.0001 | 0.0005 | | 3 | -3.5 | 34 | 16.5 | Invention Example |
| 17 | 0.001 | 3.0 | 1.5 | 0.22 | 0.0015 | 0.5 | 0.0010 | 0.0005 | 0.0001 | 0.0001 | 0.0005 | | - | - | - | - | Comparative Example |
| 18 | 0.001 | 3.0 | 1.9 | 0.01 | 0.0015 | 0.5 | 0.0010 | 0.0005 | 0.0001 | 0.0001 | 0.0005 | - | 0 | -7.9 | 50 | 17.8 | Comparative Example |
| 19 | 0.001 | 3.0 | 1.9 | 0.01 | 0.0015 | 0.5 | 0.0010 | 0.0005 | 0.0001 | 0.0001 | 0.0005 | - | 3 | -3.1 | 33 | 17.7 | Invention Example |
| 20 | 0.001 | 3.0 | 2.1 | 0.01 | 0.0015 | 0.5 | 0.0010 | 0.0005 | 0.0001 | 0.0001 | 0.0005 | - | 3 | -3.0 | 32 | 20.8 | Comparative Example |
| 21 | 0.001 | 3.6 | 0.8 | 0.01 | 0.0015 | 0.01 | 0.0010 | 0.0005 | 0.0001 | 0.0001 | 0.0005 | - | 0 | -8.5 | 55 | 15.6 | Comparative Example |
| 22 | 0.001 | 3.6 | 0.8 | 0.01 | 0.0015 | 0.01 | 0.0010 | 0.0005 | 0.0001 | 0.0001 | 0.0005 | - | 3 | -3.6 | 34 | 15.6 | Invention Example |
| 23 | 0.001 | 3.6 | 0.8 | 0.01 | 0.0015 | 0.1 | 0.0010 | 0.0005 | 0.0001 | 0.0001 | 0.0005 | - | 0 | -8.2 | 54 | 15.4 | Comparative Example |
| 24 | 0.001 | 3.6 | 0.8 | 0.01 | 0.0015 | 0.1 | 0.0010 | 0.0005 | 0.0001 | 0.0001 | 0.0005 | - | 3 | -3.2 | 33 | 15.4 | Invention Example |
| 25 | 0.001 | 3.6 | 0.8 | 0.01 | 0.0015 | 0.8 | 0.0010 | 0.0005 | 0.0001 | 0.0001 | 0.0005 | - | 0 | -8.5 | 54 | 15.2 | Comparative Example |
| 26 | 0.001 | 3.6 | 0.8 | 0.01 | 0.0015 | 0.8 | 0.0010 | 0.0005 | 0.0001 | 0.0001 | 0.0005 | - | 3 | -2.8 | 32 | 15.1 | Invention Example |

[Table 2-2]

| No. | Chemical components (mass%) of steel material | | | | | | | | | | | | Magnetic field (T) in sheet thickness direction | Steel sheet properties | Ring core properties | | Remarks |
|---|---|---|---|---|---|---|---|---|---|---|---|---|---|---|---|---|---|
| | C | Si | Mn | P | S | Al | N | Ti | Nb | v | O | Others | | Magnetostriction average value $a_{\perp IH}^{ave}$ ($\times 10^{-6}$) | Noise level (dBA) | Iron loss $W_{10/400}$ (W/kg) | |
| 27 | 0.001 | 3.6 | 0.8 | 0.01 | 0.0015 | 1.5 | 0.0010 | 0.0005 | 0.0001 | 0.0001 | 0.0005 | - | 0 | -8.4 | 53 | 17.2 | Comparative Example |
| 28 | 0.001 | 3.6 | 0.8 | 0.01 | 0.0015 | 1.5 | 0.0010 | 0.0005 | 0.0001 | 0.0001 | 0.0005 | - | 3 | -2.6 | 31 | 17.4 | Invention Example |
| 29 | 0.001 | 3.6 | 0.8 | 0.01 | 0.0015 | 2.0 | 0.0010 | 0.0005 | 0.0001 | 0.0001 | 0.0005 | - | 0 | -8.2 | 52 | 18.3 | Comparative Example |
| 30 | 0.001 | 3.6 | 0.8 | 0.01 | 0.0015 | 2.0 | 0.0010 | 0.0005 | 0.0001 | 0.0001 | 0.0005 | - | 3 | -2.4 | 31 | 18.1 | Invention Example |
| 31 | 0.001 | 3.6 | 0.8 | 0.01 | 0.0015 | 2.2 | 0.0010 | 0.0005 | 0.0001 | 0.0001 | 0.0005 | - | 3 | -2.4 | 30 | 22.3 | Comparative Example |
| 32 | 0.001 | 3.5 | 0.8 | 0.01 | 0.0015 | 0.5 | 0.0010 | 0.0005 | 0.0001 | 0.0001 | 0.0005 | - | 3 | -2.9 | 33 | 15.8 | Invention Example |
| 33 | 0.001 | 3.5 | 0.8 | 0.01 | 0.0045 | 0.5 | 0.0010 | 0.0005 | 0.0001 | 0.0001 | 0.0005 | - | 3 | -2.8 | 32 | 19.7 | Invention Example |
| 34 | 0.001 | 3.5 | 0.8 | 0.01 | 0.0055 | 0.5 | 0.0010 | 0.0005 | 0.0001 | 0.0001 | 0.0005 | - | 3 | -2.9 | 33 | 21.1 | Comparative Example |
| 35 | 0.001 | 3.5 | 0.8 | 0.01 | 0.0015 | 0.5 | 0.0005 | 0.0005 | 0.0001 | 0.0001 | 0.0005 | - | 3 | -3.0 | 33 | 15.2 | Invention Example |
| 36 | 0.001 | 3.6 | 0.8 | 0.01 | 0.0015 | 0.5 | 0.0048 | 0.0005 | 0.0001 | 0.0001 | 0.0005 | - | 3 | -2.6 | 31 | 19.6 | Invention Example |
| 37 | 0.001 | 3.5 | 0.8 | 0.01 | 0.0015 | 0.5 | 0.0054 | 0.0005 | 0.0001 | 0.0001 | 0.0005 | - | 3 | -2.7 | 32 | 20.7 | Comparative Example |
| 38 | 0.001 | 3.7 | 0.8 | 0.01 | 0.0015 | 0.5 | 0.0010 | 0.0001 | 0.0001 | 0.0001 | 0.0005 | - | 3 | -2.6 | 32 | 16.1 | Invention Example |
| 39 | 0.001 | 3.5 | 0.8 | 0.01 | 0.0015 | 0.5 | 0.0010 | 0.0020 | 0.0001 | 0.0001 | 0.0005 | - | 3 | -2.6 | 31 | 17.7 | Invention Example |

| No. | Chemical components (mass%) of steel material | | | | | | | | | | | | Magnetic field (T) in sheet thickness direction | Steel sheet properties | Ring core properties | | Remarks |
|---|---|---|---|---|---|---|---|---|---|---|---|---|---|---|---|---|---|
| | C | Si | Mn | P | S | Al | N | Ti | Nb | v | O | Others | | Magnetostriction average value $a_{\perp IH}^{ave}$ ($\times 10^{-6}$) | Noise level (dBA) | Iron loss $W_{10/400}$ (W/kg) | |
| 40 | 0.001 | 3.6 | 0.8 | 0.01 | 0.0015 | 0.5 | 0.0010 | 0.0027 | 0.0001 | 0.0001 | 0.0005 | - | 3 | -2.7 | 31 | 19.3 | Invention Example |
| 41 | 0.001 | 3.6 | 0.8 | 0.01 | 0.0015 | 0.5 | 0.0010 | 0.0033 | 0.0001 | 0.0001 | 0.0005 | - | 3 | -2.5 | 30 | 20.4 | Comparative Example |
| 42 | 0.001 | 3.7 | 0.8 | 0.01 | 0.0015 | 0.5 | 0.0010 | 0.0005 | 0.0005 | 0.0001 | 0.0005 | - | 3 | -2.6 | 31 | 16.7 | Invention Example |
| 43 | 0.001 | 3.6 | 0.8 | 0.01 | 0.0015 | 0.5 | 0.0010 | 0.0005 | 0.0008 | 0.0001 | 0.0005 | - | 3 | -2.7 | 31 | 18.4 | Invention Example |
| 44 | 0.001 | 3.5 | 0.8 | 0.01 | 0.0015 | 0.5 | 0.0010 | 0.0005 | 0.0013 | 0.0001 | 0.0005 | - | 3 | -2.9 | 32 | 20.2 | Comparative Example |
| 45 | 0.001 | 3.5 | 0.8 | 0.01 | 0.0015 | 0.5 | 0.0010 | 0.0005 | 0.0001 | 0.0010 | 0.0005 | - | 3 | -2.8 | 31 | 17.3 | Invention Example |
| 46 | 0.001 | 3.5 | 0.8 | 0.01 | 0.0015 | 0.5 | 0.0010 | 0.0005 | 0.0001 | 0.0036 | 0.0005 | - | 3 | -2.9 | 31 | 18.8 | Invention Example |
| 47 | 0.001 | 3.6 | 0.8 | 0.01 | 0.0015 | 0.5 | 0.0010 | 0.0005 | 0.0001 | 0.0046 | 0.0005 | - | 3 | -2.7 | 30 | 19.6 | Invention Example |
| 48 | 0.001 | 3.5 | 0.8 | 0.01 | 0.0015 | 0.5 | 0.0010 | 0.0005 | 0.0001 | 0.0055 | 0.0005 | - | 3 | -2.8 | 30 | 20.8 | Comparative Example |
| 49 | 0.001 | 3.5 | 0.8 | 0.01 | 0.0015 | 0.5 | 0.0010 | 0.0005 | 0.0001 | 0.0001 | 0.0016 | - | 3 | -2.9 | 31 | 17.1 | Invention Example |
| 50 | 0.001 | 3.5 | 0.8 | 0.01 | 0.0015 | 0.5 | 0.0010 | 0.0005 | 0.0001 | 0.0001 | 0.0044 | - | 3 | -2.8 | 31 | 19.5 | Invention Example |
| 51 | 0.001 | 3.5 | 0.8 | 0.01 | 0.0015 | 0.5 | 0.0010 | 0.0005 | 0.0001 | 0.0001 | 0.0053 | - | 3 | -2.9 | 32 | 20.2 | Comparative Example |

[Table 2-3]

| No. | Chemical components (mass%) of steel material | | | | | | | | | | | | Magnetic field (T) in sheet thickness direction | Steel sheet properties | Ring core properties | | Remarks |
|---|---|---|---|---|---|---|---|---|---|---|---|---|---|---|---|---|---|
| | C | Si | Mn | P | S | Al | N | Ti | Nb | V | O | Others | | Magnetostriction average value $a_{\perp IH}^{ave}$ ($\times 10^{-6}$) | Noise level (dBA) | Iron loss $W_{10/400}$ (W/kg) | |
| 52 | 0.001 | 3.5 | 0.8 | 0.01 | 0.0015 | 0.5 | 0.0010 | 0.0005 | 0.0001 | 0.0001 | 0.0005 | Sn:0.004 | 3 | -2.9 | 32 | 15.6 | Invention Example |
| 53 | 0.001 | 3.5 | 0.8 | 0.01 | 0.0015 | 0.5 | 0.0010 | 0.0005 | 0.0001 | 0.0001 | 0.0005 | Sn:0.006 | 3 | -3.0 | 33 | 15.4 | Invention Example |
| 54 | 0.001 | 3.5 | 0.8 | 0.01 | 0.0015 | 0.5 | 0.0010 | 0.0005 | 0.0001 | 0.0001 | 0.0005 | Sn:0.08 | 3 | -2.8 | 31 | 14.9 | Invention Example |
| 55 | 0.001 | 3.5 | 0.8 | 0.01 | 0.0015 | 0.5 | 0.0010 | 0.0005 | 0.0001 | 0.0001 | 0.0005 | Sn:0.18 | 3 | -3.0 | 33 | 14.7 | Invention Example |
| 56 | 0.001 | 3.5 | 0.8 | 0.01 | 0.0015 | 0.5 | 0.0010 | 0.0005 | 0.0001 | 0.0001 | 0.0005 | Sb:0.003 | 3 | -2.9 | 32 | 15.7 | Invention Example |
| 57 | 0.001 | 3.5 | 0.8 | 0.01 | 0.0015 | 0.5 | 0.0010 | 0.0005 | 0.0001 | 0.0001 | 0.0005 | Sb:0.007 | 3 | -2.8 | 32 | 15.2 | Invention Example |
| 58 | 0.001 | 3.5 | 0.8 | 0.01 | 0.0015 | 0.5 | 0.0010 | 0.0005 | 0.0001 | 0.0001 | 0.0005 | Sb:0.12 | 3 | -2.9 | 31 | 14.8 | Invention Example |
| 59 | 0.001 | 3.5 | 0.8 | 0.01 | 0.0015 | 0.5 | 0.0010 | 0.0005 | 0.0001 | 0.0001 | 0.0005 | Sb:0.17 | 3 | -2.8 | 32 | 14.6 | Invention Example |
| 60 | 0.001 | 3.6 | 0.8 | 0.01 | 0.0015 | 0.5 | 0.0010 | 0.0005 | 0.0001 | 0.0001 | 0.0005 | Ca:0.0003 | 3 | -2.7 | 31 | 15.7 | Invention Example |
| 61 | 0.001 | 3.6 | 0.8 | 0.01 | 0.0015 | 0.5 | 0.0010 | 0.0005 | 0.0001 | 0.0001 | 0.0005 | Ca:0.0008 | 3 | -2.6 | 30 | 15.6 | Invention Example |
| 62 | 0.001 | 3.6 | 0.8 | 0.01 | 0.0015 | 0.5 | 0.0010 | 0.0005 | 0.0001 | 0.0001 | 0.0005 | Ca:0.0335 | 3 | -2.7 | 31 | 15.3 | Invention Example |
| 63 | 0.001 | 3.6 | 0.8 | 0.01 | 0.0015 | 0.5 | 0.0010 | 0.0005 | 0.0001 | 0.0001 | 0.0005 | Ca:0.0805 | 3 | -2.7 | 31 | 15.7 | Invention Example |
| 64 | 0.001 | 3.6 | 0.8 | 0.01 | 0.0015 | 0.5 | 0.0010 | 0.0005 | 0.0001 | 0.0001 | 0.0005 | Mg:0.0002 | 3 | -2.7 | 32 | 15.6 | Invention Example |

17

| No. | Chemical components (mass%) of steel material | | | | | | | | | | | | Magnetic field (T) in sheet thickness direction | Steel sheet properties | Ring core properties | | Remarks |
|---|---|---|---|---|---|---|---|---|---|---|---|---|---|---|---|---|---|
| | C | Si | Mn | P | S | Al | N | Ti | Nb | V | O | Others | | Magnetostriction average value $a_{\perp IH}^{ave}$ ($\times 10^{-6}$) | Noise level (dBA) | Iron loss $W_{10/400}$ (W/kg) | |
| 65 | 0.001 | 3.6 | 0.8 | 0.01 | 0.0015 | 0.5 | 0.0010 | 0.0005 | 0.0001 | 0.0001 | 0.0005 | Mg:0.0012 | 3 | -2.8 | 32 | 15.4 | Invention Example |
| 66 | 0.001 | 3.6 | 0.8 | 0.01 | 0.0015 | 0.5 | 0.0010 | 0.0005 | 0.0001 | 0.0001 | 0.0005 | Mg:0.045 | 3 | -2.6 | 31 | 15.2 | Invention Example |
| 67 | 0.001 | 3.6 | 0.8 | 0.01 | 0.0015 | 0.5 | 0.0010 | 0.0005 | 0.0001 | 0.0001 | 0.0005 | Mg:0.083 | 3 | -2.7 | 31 | 15.8 | Invention Example |
| 68 | 0.001 | 3.6 | 0.8 | 0.01 | 0.0015 | 0.5 | 0.0010 | 0.0005 | 0.0001 | 0.0001 | 0.0005 | REM:0.0004 | 3 | -2.7 | 31 | 15.5 | Invention Example |
| 69 | 0.001 | 3.6 | 0.8 | 0.01 | 0.0015 | 0.5 | 0.0010 | 0.0005 | 0.0001 | 0.0001 | 0.0005 | REM:0.0007 | 3 | -2.6 | 30 | 14.9 | Invention Example |
| 70 | 0.001 | 3.6 | 0.8 | 0.01 | 0.0015 | 0.5 | 0.0010 | 0.0005 | 0.0001 | 0.0001 | 0.0005 | REM:0.0432 | 3 | -2.8 | 32 | 15.1 | Invention Example |
| 71 | 0.001 | 3.6 | 0.8 | 0.01 | 0.0015 | 0.5 | 0.0010 | 0.0005 | 0.0001 | 0.0001 | 0.0005 | REM:0.0953 | 3 | -2.7 | 32 | 15.7 | Invention Example |
| 72 | 0.001 | 3.6 | 0.8 | 0.01 | 0.0015 | 0.5 | 0.0010 | 0.0005 | 0.0001 | 0.0001 | 0.0005 | Cr:0.015 | 3 | -2.7 | 31 | 15.8 | Invention Example |
| 73 | 0.001 | 3.6 | 0.8 | 0.01 | 0.0015 | 0.5 | 0.0010 | 0.0005 | 0.0001 | 0.0001 | 0.0005 | Cr:0.54 | 3 | -2.7 | 32 | 15.4 | Invention Example |
| 74 | 0.001 | 3.6 | 0.8 | 0.01 | 0.0015 | 0.5 | 0.0010 | 0.0005 | 0.0001 | 0.0001 | 0.0005 | Cr:0.95 | 3 | -2.6 | 32 | 15.1 | Invention Example |
| 75 | 0.001 | 3.6 | 0.8 | 0.01 | 0.0015 | 0.5 | 0.0010 | 0.0005 | 0.0001 | 0.0001 | 0.0005 | Cu:0.014 | 3 | -2.6 | 31 | 15.6 | Invention Example |
| 76 | 0.001 | 3.6 | 0.8 | 0.01 | 0.0015 | 0.5 | 0.0010 | 0.0005 | 0.0001 | 0.0001 | 0.0005 | Cu:0.64 | 3 | -2.7 | 32 | 15.4 | Invention Example |
| 77 | 0.001 | 3.6 | 0.8 | 0.01 | 0.0015 | 0.5 | 0.0010 | 0.0005 | 0.0001 | 0.0001 | 0.0005 | Cu:0.86 | 3 | -2.6 | 32 | 15.2 | Invention Example |

[Table 2-4]

| No. | Chemical components (mass%) of steel material | | | | | | | | | | | | Magnetic field(T) in sheet thickness direction | Steel sheet properties | Ring core properties | | Remarks |
| | C | Si | Mn | P | S | Al | N | Ti | Nb | V | O | Others | | Magnetostriction average value $\lambda_{\perp H}^{ave}(\times 10^{-6})$ | Noise level (dBA) | Iron loss $W_{10/400}$ (W/kg) | |
|---|---|---|---|---|---|---|---|---|---|---|---|---|---|---|---|---|---|
| 78 | 0.001 | 3.6 | 0.8 | 0.01 | 0.0015 | 0.5 | 0.0010 | 0.0005 | 0.0001 | 0.0001 | 0.0005 | Ni:0.021 | 3 | -2.6 | 31 | 15.4 | Invention Example |
| 79 | 0.001 | 3.6 | 0.8 | 0.01 | 0.0015 | 0.5 | 0.0010 | 0.0005 | 0.0001 | 0.0001 | 0.0005 | Ni:0.165 | 3 | -2.8 | 31 | 15.0 | Invention Example |
| 80 | 0.001 | 3.6 | 0.8 | 0.01 | 0.0015 | 0.5 | 0.0010 | 0.0005 | 0.0001 | 0.0001 | 0.0005 | Ni:0.92 | 3 | -2.6 | 32 | 14.5 | Invention Example |
| 81 | 0.001 | 3.6 | 0.8 | 0.01 | 0.0015 | 0.5 | 0.0010 | 0.0005 | 0.0001 | 0.0001 | 0.0005 | Mo:0.0008 | 3 | -2.6 | 31 | 15.8 | Invention Example |
| 82 | 0.001 | 3.6 | 0.8 | 0.01 | 0.0015 | 0.5 | 0.0010 | 0.0005 | 0.0001 | 0.0001 | 0.0005 | Mo:0.012 | 3 | -2.7 | 32 | 15.4 | Invention Example |
| 83 | 0.001 | 3.6 | 0.8 | 0.01 | 0.0015 | 0.5 | 0.0010 | 0.0005 | 0.0001 | 0.0001 | 0.0005 | Mo:0.0942 | 3 | -2.7 | 32 | 15.1 | Invention Example |
| 84 | 0.001 | 3.6 | 0.8 | 0.01 | 0.0015 | 0.5 | 0.0010 | 0.0005 | 0.0001 | 0.0001 | 0.0005 | W:0.0016 | 3 | -2.6 | 31 | 15.7 | Invention Example |
| 85 | 0.001 | 3.6 | 0.8 | 0.01 | 0.0015 | 0.5 | 0.0010 | 0.0005 | 0.0001 | 0.0001 | 0.0005 | W:0.034 | 3 | -2.8 | 32 | 15.3 | Invention Example |
| 86 | 0.001 | 3.6 | 0.8 | 0.01 | 0.0015 | 0.5 | 0.0010 | 0.0005 | 0.0001 | 0.0001 | 0.0005 | W:0.0965 | 3 | -2.7 | 31 | 15.2 | Invention Example |
| 87 | 0.001 | 3.6 | 0.8 | 0.01 | 0.0015 | 0.5 | 0.0010 | 0.0005 | 0.0001 | 0.0001 | 0.0005 | Co:0.0121 | 3 | -2.5 | 31 | 15.3 | Invention Example |
| 88 | 0.001 | 3.6 | 0.8 | 0.01 | 0.0015 | 0.5 | 0.0010 | 0.0005 | 0.0001 | 0.0001 | 0.0005 | Co:0.268 | 3 | -2.6 | 30 | 14.6 | Invention Example |
| 89 | 0.001 | 3.6 | 0.8 | 0.01 | 0.0015 | 0.5 | 0.0010 | 0.0005 | 0.0001 | 0.0001 | 0.0005 | Co:0.971 | 3 | -2.7 | 31 | 14.2 | Invention Example |
| 90 | 0.001 | 3.6 | 0.8 | 0.01 | 0.0015 | 0.5 | 0.0010 | 0.0005 | 0.0001 | 0.0001 | 0.0005 | As:0.0014 | 3 | -2.6 | 31 | 15.6 | Invention Example |

(continued)

| No. | Chemical components (mass%) of steel material | | | | | | | | | | | | | Steel sheet properties | | Ring core properties | | Remarks |
|---|---|---|---|---|---|---|---|---|---|---|---|---|---|---|---|---|---|---|
| | C | Si | Mn | P | S | Al | N | Ti | Nb | V | O | Others | Magnetic field(T) in sheet thickness direction | Magnetostriction average value $\lambda_{\perp H}^{ave}(\times 10^{-6})$ | Noise level (dBA) | Iron loss $W_{10/400}$ (W/kg) | |
| 91 | 0.001 | 3.6 | 0.8 | 0.01 | 0.0015 | 0.5 | 0.0010 | 0.0005 | 0.0001 | 0.0001 | 0.0005 | As:0.0156 | 3 | -2.8 | 31 | 15.2 | Invention Example |
| 92 | 0.001 | 3.6 | 0.8 | 0.01 | 0.0015 | 0.5 | 0.0010 | 0.0005 | 0.0001 | 0.0001 | 0.0005 | As:0.0468 | 3 | -2.7 | 32 | 14.7 | Invention Example |
| 93 | 0.001 | 3.6 | 0.8 | 0.01 | 0.0015 | 0.5 | 0.0010 | 0.0005 | 0.0001 | 0.0001 | 0.0005 | B:0.0003 | 3 | -2.7 | 32 | 15.5 | Invention Example |
| 94 | 0.001 | 3.6 | 0.8 | 0.01 | 0.0015 | 0.5 | 0.0010 | 0.0005 | 0.0001 | 0.0001 | 0.0005 | B:0.0035 | 3 | -2.7 | 32 | 15.1 | Invention Example |
| 95 | 0.001 | 3.6 | 0.8 | 0.01 | 0.0015 | 0.5 | 0.0010 | 0.0005 | 0.0001 | 0.0001 | 0.0005 | B:0.0047 | 3 | -2.6 | 32 | 15.7 | Invention Example |
| 96 | 0.001 | 3.6 | 0.8 | 0.01 | 0.0015 | 0.5 | 0.0010 | 0.0005 | 0.0001 | 0.0001 | 0.0005 | Pb:0.00002 | 3 | -2.7 | 31 | 15.7 | Invention Example |
| 97 | 0.001 | 3.6 | 0.8 | 0.01 | 0.0015 | 0.5 | 0.0010 | 0.0005 | 0.0001 | 0.0001 | 0.0005 | Pb:0.0003 | 3 | -2.6 | 32 | 16.2 | Invention Example |
| 98 | 0.001 | 3.6 | 0.8 | 0.01 | 0.0015 | 0.5 | 0.0010 | 0.0005 | 0.0001 | 0.0001 | 0.0005 | Pb:0.0095 | 3 | -2.7 | 32 | 18.8 | Invention Example |
| 99 | 0.001 | 3.6 | 0.8 | 0.01 | 0.0015 | 0.5 | 0.0010 | 0.0005 | 0.0001 | 0.0001 | 0.0005 | Zn:0.0002 | 3 | -2.7 | 31 | 15.5 | Invention Example |
| 100 | 0.001 | 3.6 | 0.8 | 0.01 | 0.0015 | 0.5 | 0.0010 | 0.0005 | 0.0001 | 0.0001 | 0.0005 | Zn:0.003 | 3 | -2.6 | 31 | 15.2 | Invention Example |
| 101 | 0.001 | 3.6 | 0.8 | 0.01 | 0.0015 | 0.5 | 0.0010 | 0.0005 | 0.0001 | 0.0001 | 0.0005 | Zn:0.018 | 3 | -2.7 | 31 | 15.1 | Invention Example |

[Table 2-5]

| No. | Chemical components (mass%) of steel material | | | | | | | | | | | | Magnetic field (T) in sheet thickness direction | Steel sheet properties | Ring core properties | | Remarks |
|---|---|---|---|---|---|---|---|---|---|---|---|---|---|---|---|---|---|
| | C | Si | Mn | P | S | Al | N | Ti | Nb | V | O | Others | | Magnetostriction average value $\lambda_{\perp H}^{ave}$ ($\times 10^{-6}$) | Noise level (dBA) | Iron loss $W_{10/400}$ (W/kg) | |
| 102 | 0.001 | 3.6 | 0.8 | 0.01 | 0.0015 | 0.5 | 0.001 | 0.0005 | 0.0001 | 0.0001 | 0.0005 | Zr:0.0026 | 3 | -2.7 | 31 | 16.3 | Invention Example |
| 103 | 0.001 | 3.6 | 0.8 | 0.01 | 0.0015 | 0.5 | 0.001 | 0.0005 | 0.0001 | 0.0001 | 0.0005 | Zr:0.0048 | 3 | -2.5 | 32 | 18.4 | Invention Example |
| 104 | 0.001 | 3.6 | 0.8 | 0.01 | 0.0015 | 0.5 | 0.001 | 0.0005 | 0.0001 | 0.0001 | 0.0005 | Ta:0.0009 | 3 | -2.6 | 31 | 16.6 | Invention Example |
| 105 | 0.001 | 3.6 | 0.8 | 0.01 | 0.0015 | 0.5 | 0.001 | 0.0005 | 0.0001 | 0.0001 | 0.0005 | Ta:0.0018 | 3 | -2.8 | 30 | 18.6 | Invention Example |
| 106 | 0.001 | 3.6 | 0.8 | 0.01 | 0.0015 | 0.5 | 0.001 | 0.0005 | 0.0001 | 0.0001 | 0.0005 | Se:0.0028 | 3 | -2.6 | 31 | 16.4 | Invention Example |
| 107 | 0.001 | 3.6 | 0.8 | 0.01 | 0.0015 | 0.5 | 0.001 | 0.0005 | 0.0001 | 0.0001 | 0.0005 | Se:0.0049 | 3 | -2.6 | 32 | 18.3 | Invention Example |
| 108 | 0.001 | 3.6 | 0.8 | 0.01 | 0.0015 | 0.5 | 0.001 | 0.0005 | 0.0001 | 0.0001 | 0.0005 | Bi:0.0009 | 3 | -2.7 | 31 | 16.7 | Invention Example |
| 109 | 0.001 | 3.6 | 0.8 | 0.01 | 0.0015 | 0.5 | 0.001 | 0.0005 | 0.0001 | 0.0001 | 0.0005 | Bi:0.0018 | 3 | -2.6 | 30 | 18.9 | Invention Example |
| 110 | 0.001 | 3.6 | 0.8 | 0.01 | 0.0015 | 0.5 | 0.001 | 0.0005 | 0.0001 | 0.0001 | 0.0005 | Ge:0.0007 | 3 | -2.9 | 31 | 15.7 | Invention Example |
| 111 | 0.001 | 3.6 | 0.8 | 0.01 | 0.0015 | 0.5 | 0.001 | 0.0005 | 0.0001 | 0.0001 | 0.0005 | Ge:0.028 | 3 | -2.7 | 31 | 15.2 | Invention Example |
| 112 | 0.001 | 3.6 | 0.8 | 0.01 | 0.0015 | 0.5 | 0.001 | 0.0005 | 0.0001 | 0.0001 | 0.0005 | Ga:0.009 | 3 | -2.7 | 32 | 15.4 | Invention Example |
| 113 | 0.001 | 3.6 | 0.8 | 0.01 | 0.0015 | 0.5 | 0.001 | 0.0005 | 0.0001 | 0.0001 | 0.0005 | Ga:0.027 | 3 | -2.8 | 31 | 15.1 | Invention Example |
| 114 | 0.001 | 3.6 | 0.8 | 0.01 | 0.0015 | 0.5 | 0.001 | 0.0005 | 0.0001 | 0.0001 | 0.0005 | Sn:0.01 Ca:0.0003 | 3 | -2.6 | 31 | 15.2 | Invention Example |

(continued)

| No. | Chemical components (mass%) of steel material | | | | | | | | | | | | Magnetic field (T) in sheet thickness direction | Steel sheet properties | Ring core properties | | Remarks |
|---|---|---|---|---|---|---|---|---|---|---|---|---|---|---|---|---|---|
| | C | Si | Mn | P | S | Al | N | Ti | Nb | V | O | Others | | Magnetostriction average value $\lambda_{\perp H}^{ave}$ ($\times 10^{-6}$) | Noise level (dBA) | Iron loss $W_{10/400}$ (W/kg) | |
| 115 | 0.001 | 3.6 | 0.8 | 0.01 | 0.0015 | 0.5 | 0.001 | 0.0005 | 0.0001 | 0.0001 | 0.0005 | Cu:0.2 Ni:0.1 | 3 | -2.7 | 31 | 15.5 | Invention Example |
| 116 | 0.001 | 3.6 | 0.8 | 0.01 | 0.0015 | 0.5 | 0.001 | 0.0005 | 0.0001 | 0.0001 | 0.0005 | W:0.005 Co:0.100 | 3 | -2.6 | 32 | 15.4 | Invention Example |
| 117 | 0.001 | 3.6 | 0.8 | 0.01 | 0.0015 | 0.5 | 0.001 | 0.0005 | 0.0001 | 0.0001 | 0.0005 | As:0.005 Pb:0.0002 | 3 | -2.8 | 31 | 16.2 | Invention Example |
| 118 | 0.001 | 3.6 | 0.8 | 0.01 | 0.0015 | 0.5 | 0.001 | 0.0005 | 0.0001 | 0.0001 | 0.0005 | Zn:0.005 Ta:0.0005 | 3 | -2.6 | 32 | 15.5 | Invention Example |
| 119 | 0.001 | 3.6 | 0.8 | 0.01 | 0.0015 | 0.5 | 0.001 | 0.0005 | 0.0001 | 0.0001 | 0.0005 | Zr:0.0050 Ge:0.0040 | 3 | -2.6 | 32 | 15.4 | Invention Example |

[Table 2-6]

| No. | Chemical components (mass%) of steel material | | | | | | | | | | | | Magnetic field (T) in sheet thickness direction | Steel sheet properties | Ring core properties | | Remarks |
|---|---|---|---|---|---|---|---|---|---|---|---|---|---|---|---|---|---|
| | C | Si | Mn | P | S | Al | N | Ti | Nb | V | O | Others | | Magnetostriction average value $a_{\perp IH}^{ave}$ ($\times 10^{-6}$) | Noise level (dBA) | Iron loss $W_{10/400}$ (W/kg) | |
| 120 | 0.001 | 3.6 | 0.8 | 0.01 | 0.0015 | 0.5 | 0.001 | 0.0005 | 0.0001 | 0.0001 | 0.0005 | Sb:0.02 Cr:0.05 Mo:0.03 | 3 | -2.7 | 30 | 15.5 | Invention Example |
| 121 | 0.001 | 3.6 | 0.8 | 0.01 | 0.0015 | 0.5 | 0.001 | 0.0005 | 0.0001 | 0.0001 | 0.0005 | REM:0.003 Ni:0.08 B:0.0010 | 3 | -2.7 | 31 | 15.4 | Invention Example |
| 122 | 0.001 | 3.6 | 0.8 | 0.01 | 0.0015 | 0.5 | 0.001 | 0.0005 | 0.0001 | 0.0001 | 0.0005 | Pb:0.0005 Zn:0.0050 Ga:0.0050 | 3 | -2.7 | 32 | 16.1 | Invention Example |
| 123 | 0.001 | 3.6 | 0.8 | 0.01 | 0.0015 | 0.5 | 0.001 | 0.0005 | 0.0001 | 0.0001 | 0.0005 | Sn:0.05 REM:0.0030 Cu:0.13 Ni:0.05 Mo:0.020 Co:0.03 As:0.0050 Pb:0.0002 Zn:0.0030 Ta:0.0005 Zr:0.0010 Ge:0.0010 | 3 | -2.8 | 31 | 15.7 | Invention Example |

Example 3

Steel having a chemical composition containing C: 0.0015 mass%, Si: 3.4 mass%, Mn: 0.7 mass%, P: 0.020 mass%, S: 0.0005 mass%, Al: 1.0 mass%, N: 0.0020 mass%, Ti: 0.0020 mass%, Nb: 0.0001 mass%, V: 0.0002 mass%, O: 0.0010 mass%, Sn: 0.01 mass%, Cu: 0.05 mass%, Ni: 0.05 mass%, Cr: 0.02 mass%, Mo: 0.02 mass%, B: 0.0003 mass%, Pb: 0.0001 mass%, As: 0.0003 mass%, Zn: 0.0020 mass%, Co: 0.0030 mass%, and Ga: 0.0030 mass% was smelted using an electrical furnace. Thereafter, using a thin-slab continuous caster having a continuous casting facility and a hot-rolling facility directly coupled to each other, the steel was cast into a 100 mm-thick thin slab, which was then hot-rolled into a hot-rolled sheet with a sheet thickness of 0.8 mm. Next, this hot-rolled sheet was subjected to hot-rolled sheet annealing of 1000°C×30s, pickled, and cold-rolled into a cold-rolled sheet with a final sheet thickness of 0.25 mm. Next, this cold-rolled sheet was rapidly heated through a temperature region of 200°C to 700°C at an average heating rate of 1000°C/s, and in this temperature region, a direct-current magnetic field of 5 T was applied in the sheet thickness direction. Thereafter, the steel sheet was heated from 700°C to 1000°C, without being cooled, and subjected to finishing annealing of 1000°C×10s, and then an insulation coating was formed thereon to obtain a product sheet.

From the product sheet thus obtained, test pieces having a ring shape with an outside diameter of 80 mm and an inside diameter of 60 mm and having notches at eight positions in the ring outer circumference as shown in Fig. 1 were punched out. Then, 100 sheets of the test pieces were laminated in the sheet thickness direction and fixed at six positions by welding to produce a ring core. Next, this ring core was shrink-fitted into an austenitic stainless-steel case having a thickness of 3 mm and an inside diameter of 80 mm, with a shrink-fit allowance of 40 $\mu$m. Thereafter, a primary winding and a secondary winding were wound around the shrink-fitted ring core as shown in Fig. 1, and then iron loss $W_{15/50}$ when exciting at a frequency of 50 Hz and a maximum magnetic flux density $B_m$ of 1.5 T was measured. When the iron loss $W_{15/50}$ was 20.0 W/kg or smaller, the iron loss property was evaluated as favorable. Further, noise during the excitation was measured by installing a noise level meter at a position 50 mm away from the case outer circumference. When the noise was 40 dBA or lower, the noise property was evaluated as excellent.

Furthermore, rectangular test pieces measuring 30 mm wide by 280 mm long were cut out from the product sheet such that the rolling direction, the sheet width direction, and the direction at 45° from the rolling direction constituted the respective length directions, and were excited at a frequency of 50 Hz and a maximum magnetic flux density $B_m$ of 1.5 T in the length directions of the test pieces. The zero-peak values $\lambda_{\perp H}^{RD}$, $\lambda_{\perp H}^{TD}$, and $\lambda_{\perp H}^{DD}$ of the resulting magnetostrictions in the directions perpendicular to the respective magnetic field directions and parallel to the rolling plane were measured using a strain gauge, and the magnetostriction in-plane average value $\lambda_{\perp H}^{ave}$ was obtained by the following Formula (1).

$$\lambda_{\perp H}^{ave} = \frac{\lambda_{\perp H}^{RD} + 2\lambda_{\perp H}^{DD} + \lambda_{\perp H}^{TD}}{4} \quad \cdots \quad (1)$$

The result of this measurement is shown in Table 3. From this table, it can be seen that the ring core produced using a non-oriented electrical steel sheet manufactured using a steel material having a chemical composition complying with the present invention and under conditions complying with the present invention has excellent iron loss property and noise property.

[Table 3]

| Steel sheet properties | Ring core properties | |
|---|---|---|
| Magnetostriction average value $\lambda_{\perp H}^{ave}$ ($\times 10^{-6}$) | Noise level(dBA) | Iron loss $W_{10/400}$ (W/kg) |
| -2.6 | 31 | 18.6 |

**Claims**

1. A non-oriented electrical steel sheet having a chemical composition containing C: 0.0050 mass% or less, Si: 2.0 to 5.0 mass%, Mn: 2.0 mass% or less, P: 0.20 mass% or less, S: 0.0050 mass% or less, Al: 2.0 mass% or less, N: 0.0050 mass% or less, Ti: 0.0030 mass% or less, Nb: 0.0010 mass% or less, V: 0.0050 mass% or less, and O: 0.0050 mass% or less, with the balance being Fe and unavoidable impurities,
   **characterized in that**
   when an alternating-current magnetic field with a frequency of 50 Hz and a maximum magnetic flux density $B_m$ of 1.5 T is applied in a rolling direction ($^{RD}$), a sheet width direction ($^{TD}$), and a direction ($^{DD}$) forming an angle of 45° with the rolling direction, in a rolling plane of the steel sheet, and zero-peak values of resulting magnetostrictions in directions perpendicular to the respective magnetic field directions and parallel to the rolling plane are represented as $\lambda_{\perp H}^{RD}$, $\lambda_{\perp H}^{TD}$, and $\lambda_{\perp H}^{DD}$, respectively, an absolute value of a magnetostriction in-plane average value $\lambda_{\perp H}^{ave}$ defined by the following Formula (1) is $5\times10^{-6}$ or smaller.

$$\lambda_{\perp H}^{ave} = \frac{\lambda_{\perp H}^{RD} + 2\lambda_{\perp H}^{DD} + \lambda_{\perp H}^{TD}}{4} \quad \cdots \quad (1)$$

2. The non-oriented electrical steel sheet according to claim 1, wherein the non-oriented electrical steel sheet further contains, in addition to the chemical composition, a component of at least one group among the following groups A to L:

- Group A; at least one type selected from Sn: 0.005 to 0.20 mass% and Sb: 0.005 to 0.20 mass%
- Group B; at least one type selected from Ca: 0.0005 to 0.100 mass%, Mg: 0.0005 to 0.100 mass%, and REM: 0.0005 to 0.100 mass%
- Group C; at least one type selected from Cr: 0.01 to 1.0 mass% and Cu: 0.01 to 1.0 mass%
- Group D; Ni: 0.01 to 1.0 mass%
- Group E; at least one type selected from Mo: 0.0005 to 0.1 mass% and W: 0.001 to 0.1 mass%
- Group F; Co: 0.01 to 1.0 mass%
- Group G; at least one type selected from As: 0.001 to 0.05 mass% and B: 0.0001 to 0.005 mass%
- Group H; Pb: 0.00001 to 0.010 mass%
- Group I; Zn: 0.0001 to 0.02 mass%
- Group J; Ta: 0 to 0.0020 mass%
- Group K; at least one type selected from Zr: 0 to 0.0050 mass%, Se: 0 to 0.0050 mass%, and Bi: 0 to 0.0020 mass%
- Group L; at least one type selected from Ge: 0 to 0.030 mass% and Ga: 0 to 0.030 mass%.

[Fig. 1]

[Fig. 2]

[Fig. 3]

## INTERNATIONAL SEARCH REPORT

| International application No. |
| --- |
| **PCT/JP2024/004252** |

### A. CLASSIFICATION OF SUBJECT MATTER

*C22C 38/00*(2006.01)i; *C21D 8/12*(2006.01)i; *C21D 9/46*(2006.01)i; *C22C 38/14*(2006.01)i; *C22C 38/60*(2006.01)i; *H01F 1/147*(2006.01)i; *H02K 1/02*(2006.01)i

FI: C22C38/00 303U; C22C38/14; C22C38/60; H02K1/02 Z; H01F1/147 175; C21D8/12 A; C21D9/46 501A

According to International Patent Classification (IPC) or to both national classification and IPC

### B. FIELDS SEARCHED

Minimum documentation searched (classification system followed by classification symbols)

C22C38/00; C21D8/12; C21D9/46; C22C38/14; C22C38/60; H01F1/147; H02K1/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2003-231922 A (SUMITOMO METAL INDUSTRIES, LTD.) 19 August 2003 (2003-08-19) claims, paragraphs [0018], [0035], [0064], [0069]-[0075] | 1-2 |
| A | WO 2020/090160 A1 (JFE STEEL CORPORATION) 07 May 2020 (2020-05-07) entire text | 1-2 |
| A | WO 2018/179871 A1 (JFE STEEL CORPORATION) 04 October 2018 (2018-10-04) entire text | 1-2 |
| A | JP 2001-181803 A (KAWASAKI STEEL CORP.) 03 July 2001 (2001-07-03) entire text | 1-2 |
| A | JP 7-197132 A (NKK CORP.) 01 August 1995 (1995-08-01) entire text, all drawings | 1-2 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 April 2024** | **23 April 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/004252**

| Patent document cited in search report | | | Publication date (day/month/year) | Patent family member(s) | | Publication date (day/month/year) |
|---|---|---|---|---|---|---|
| JP | 2003-231922 | A | 19 August 2003 | (Family: none) | | |
| WO | 2020/090160 | A1 | 07 May 2020 | US 2021/0371948 A1 <br> entire text <br> US 2023/0065674 A1 <br> EP 3859032 A1 <br> KR 10-2021-0056391 A <br> CN 112930412 A | | |
| WO | 2018/179871 | A1 | 04 October 2018 | US 2019/0382867 A1 <br> entire text <br> EP 3572535 A1 <br> CN 110536971 A <br> KR 10-2019-0118611 A | | |
| JP | 2001-181803 | A | 03 July 2001 | US 6562473 B1 <br> entire text <br> EP 1108794 A1 <br> KR 10-2001-0062073 A <br> CN 1308143 A | | |
| JP | 7-197132 | A | 01 August 1995 | (Family: none) | | |

Form PCT/ISA/210 (patent family annex) (July 2022)

**REFERENCES CITED IN THE DESCRIPTION**

**Patent documents cited in the description**

- JP 2010248559 A